# EUROPÄISCHE PATENTANMELDUNG

(11) **EP 4 474 760 A1**
(43) Veröffentlichungstag der Anmeldung: **11.12.2024**
(21) Anmeldenummer: 23178352.3
(22) Anmeldetag: 09.06.2023
(51) Int. Cl.: G01B 5/012, B23Q 3/155

(54) **KOORDINATENMESSGERÄT MIT EINER PINOLE UND EINEM AN ODER WENIGSTENS TEILWEISE IN DER PINOLE ANGEORDNETEN INTERFACE UND VERFAHREN ZUM ANORDNEN EINES AUSWECHSELBAREN TASTKOPFES ODER EINES AUSWECHSELBAREN SENSORS ODER EINES AUSWECHSELBAREN DREH-/SCHWENKGELENKES AN ODER IN EINEM INTERFACE EINES KOORDINATENMESSGERÄTES**

(71) Anmelder: Hexagon Metrology GmbH, 35578 Wetzlar (DE)
(72) Erfinder: Konrad, Armin, 35625 Hüttenberg (DE); Heiderich, Jens, 35745 Herborn (DE)
(74) Vertreter: Knefel, Cordula

(57) **Zusammenfassung**

Die Erfindung betrifft ein Koordinatenmessgerät mit einem an oder wenigstens teilweise in einer Pinole angeordneten Interface mit einer an dem Interface angeordneten Haltevorrichtung, bei dem in oder an dem Interface wenigstens zwei krafterzeugende Vorrichtungen angeordnet sind, die als wenigstens zwei auf die Haltevorrichtung wirkende Kräfte erzeugende Vorrichtungen ausgebildet sind, bei dem eine erste krafterzeugende Vorrichtung als Feder ausgebildet ist und bei dem eine zweite krafterzeugende Vorrichtung als pneumatisch betriebener Kolben ausgebildet ist. Die Erfindung betrifft auch ein Verfahren zum Anordnen eines auswechselbaren Tastkopfes oder eines auswechselbaren Sensors oder eines auswechselbaren Dreh-/Schwenkgelenkes an oder in einem Interface eines Koordinatenmessgerätes. (Fig. 3).

## Beschreibung

Die Erfindung betrifft ein Koordinatenmessgerät mit einer Pinole und einem an oder wenigstens teilweise in der Pinole angeordneten Interface und einer Lagervorrichtung, welche wenigstens ein an dem Interface angeordnetes Lager und wenigstens ein an einem Tastkopf oder an einem Sensor oder an einem Dreh-/Schwenkgelenk angeordnetes Gegenlager aufweist und mit einer in dem Interface angeordneten Haltevorrichtung. Darüber hinaus betrifft die Erfindung ein Verfahren zum Anordnen eines auswechselbaren Tastkopfes oder eines auswechselbaren Sensors oder eines auswechselbaren Dreh-/Schwenkgelenkes an oder wenigstens teilweise in einem Interface eines Koordinatenmessgerätes.

Aus der Praxis ist bekannt, zum dimensionellen Messen von Werkstücken mit Koordinatenmessgeräten tastende oder messende taktile und nicht taktile Sensoren zu verwenden, die fest oder lösbar fest an einem Koordinatenmessgerät angeordnet sind.

Die aus der Praxis bekannten Koordinatenmessgeräte bestehen aus mehreren beweglichen Achsen, die es ermöglichen, den Sensor im Raum so zu bewegen, dass Werkstücke dimensionell vermessen werden können.

Sensoren oder Dreh-/Schwenkgelenke werden auch als Tastköpfe bezeichnet und Tastköpfe als Sensoren oder Dreh-/ Schwenkgelenke.

Taktile Tastköpfe bestehen aus einem festen Teil, der mit einer Achse des Koordinatenmessgerätes, in der Regel mit einer Pinole, fest oder lösbar fest verbunden ist, sowie aus einem gegenüber dem festen Teil beweglichen Teil, der einen sogenannten Taststift trägt, der aus einem länglichen Schaft besteht und an dessen einem Ende ein Antastelement wie zum Beispiel eine Kugel, die sogenannte Antastkugel befestigt ist. Andere Antastelemente sind zum Beispiel Spitzen oder Kugelscheiben. Mit dem anderen Ende ist der Taststift an dem beweglichen Teil des Tastkopfes befestigt, der sich gegenüber dem festen Teil verschiebt, wenn das Antastelement mit der Oberfläche eines Werkstückes in Kontakt kommt. Überschreitet die Auslenkung des Taststiftes einen vorgegebenen Wert, wird eine Antastung an dem Werkstück detektiert.

Bei den sogenannten messenden Tastköpfen ist ebenfalls ein fester Teil, der mit einer Achse des Koordinatenmessgerätes, in der Regel mit einer Pinole, fest oder lösbar fest verbunden ist, und ein gegenüber dem festen Teil beweglicher Teil vorgesehen. Mit Hilfe geeigneter Messmittel wird die Auslenkung des beweglichen Teils in Relation zu dem festen Teil kontinuierlich gemessen. Bei den sogenannten schaltenden Tastköpfen wird eine Auslenkung lediglich mittels eines elektrischen Schaltimpulses angezeigt. Auf den beweglichen Teil des Tastkopfes wirken Rückstellkräfte, damit der Tastkopf sich in einer definierten Lage gegenüber dem festen Teil des Tastkopfes befindet, wenn keine äußeren Kräfte auf den Taststift wirken.

Darüber hinaus gehören zum Stand der Technik (DE 10 2004 010 083 B4) Koordinatenmessgeräte, bei denen die Tastköpfe Schaukeln aufweisen, die über Federparallelogrammbleche miteinander verbunden sind.

Um möglichst viele unterschiedliche Messaufgaben erfüllen zu können, besitzen taktile oder messende Tastköpfe eine mechanische Schnittstelle, in die verschiedene Taststiftkonfigurationen eingesetzt oder automatisch eingewechselt werden können.

Zum Stand der Technik (DE 10 2007 054 915 A1) gehören darüber hinaus optische Sensoren, mit denen ein berührungsloses optisches Messverfahren durchgeführt werden kann.

Um komplexe Messobjekte, wie zum Beispiel Motorblöcke mit einem Koordinatenmessgerät vermessen zu können, ist nicht nur ein häufiger Wechsel der Taststiftkonfigurationen erforderlich, sondern auch ein relativ häufiger Wechsel des Tastkopfes oder Sensors oder eines Dreh-/Schwenkgelenkes. Der Tastkopf oder Sensor oder das Dreh-/Schwenkgelenk ist üblicherweise an einer Pinole des Koordinatenmessgerätes angeordnet. In sogenannten Tastkopf- oder Sensorhalterungen können verschiedene Tastköpfe oder Sensoren oder Dreh-/ Schwenkgelenke für verschiedene Messaufgaben gelagert sein. Diese Tastköpfe oder Sensoren oder Dreh-/Schwenkgelenke werden häufig vollautomatisch von dem Koordinatenmessgerät eingewechselt, je nachdem, welche Messaufgabe die Einwechselung eines bestimmten Tastkopfes oder Sensors oder Dreh-/Schwenkgelenkes erforderlich macht. Es kann jedoch auch ein manueller Wechsel durchgeführt werden.

Bei der Aufnahme von Dreh-/Schwenkgelenken oder Tastköpfen oder Sensoren aus einer so genannten Garage, das heißt einer Vorrichtung zum Lagern von gerade nicht benötigten Dreh-/Schwenkgelenken oder Tastköpfen oder Sensoren oder Taststiften werden viele Bewegungen des Koordinatenmessgerätes in mindestens zwei Achsen ausgeführt, wie zum Beispiel das Einfädeln eines Klemmhakens, das Bewegen eines Klemmhakens und das Ausfädeln der Taststiftaufnahme aus dem Halter.

Die aus der Praxis bekannten Koordinatenmessgeräte, insbesondere die Koordinatenmessgeräte, die in Portalbauweise aufgebaut sind, weisen eine Pinole auf, an der der Tastkopf oder Sensor oder das Dreh-/Schwenkgelenk auswechselbar und lösbar fest angeordnet ist.

Aus der Praxis sind auch Ausführungsformen bekannt, bei denen an der Pinole ein so genanntes Interface angeordnet ist. An dem Interface wird das Dreh-/Schwenkgelenk oder der Tastkopf oder der Sensor auswechselbar angeordnet.

Insbesondere bei Koordinatenmessgeräten in Portalbauweise, die eine automatisierte oder manuelle Tastkopfwechselvorrichtung aufweisen, wie zum Beispiel gemäß der DE 10 2019 122 049 A1 wird durch die Tastkopfwechselvorrichtung die definierte Messhöhe, die durch das Koordinatenmessgerät in Portalbauweise festgelegt ist, reduziert. Damit wird die zur Verfügung stehende Höhe für den Messbereich durch eine Tastkopfwechselvorrichtung reduziert.

Das bedeutet, dass bei einem reduzierten Messraum die Anwender auf größere Koordinatenmessgeräte zurückgreifen müssen, welche wiederum teurer sind und größere Messfehler aufweisen.

Zum Stand der Technik (WO 2005/068933 A1) gehört eine Montageeinrichtung, die zum manuellen Montieren einer Sensoreinrichtung an einem Koordinatenmessgerät ausgestaltet ist, mit einem ersten Verbindungselement, das an dem Koordinatenmessgerät anordbar ist, und mit einem zweiten Verbindungselement, das an der Sensoreinrichtung anordbar ist. Eines der Verbindungselemente weist einen Permanentmagneten zur Erzeugung einer Magnetkraft auf und das andere Verbindungselement weist einen durch die Magnetkraft anziehbaren Körper auf. In einer durch die Verbindungselemente definierten Anschlagsposition wirkt die Magnetkraft derart zwischen den Verbindungselementen, dass ein Beibehalten der Anschlagsposition bei einer entgegenwirkenden Gegenkraft zumindest erleichtert wird. Eine endgültige Fixierung und Stabilisierung der beiden Verbindungselemente zueinander in der Anschlagsposition wird durch eine Verdrehung eines Klemmringes durchgeführt, so dass eine die Gewichtskraft der Sensoreinrichtung, welche an dem zweiten Verbindungselement befestigt ist, um ein Vielfaches übersteigende Spannkraft erzeugt wird. Dieser Zustand kann durch die Betätigung einer Verriegelungseinrichtung gesichert werden.

Diese zum Stand der Technik gehörende Vorrichtung weist den Nachteil auf, dass die Verbindungselemente ausschließlich händisch miteinander in Kontakt gebracht werden können. Ein Verdrehen eines Klemmringes über einen Hebel zur endgültigen Fixierung ist automatisch nicht oder nur mit einem extrem großen Aufwand mit einem Roboter möglich.

Darüber hinaus weisen Permanentmagnete ein relativ hohes Gewicht auf, was von Nachteil ist, wenn das Koordinatenmessgerät die Pinole mit dem daran angeordneten Sensor verfährt. Zwischen den Messungen soll der Sensor relativ schnell verfahren werden. Es ist dann ein Abbremsen vor dem Werkstück oder einer Tastergarage erforderlich. Durch ein hohes Gewicht entstehen Schwingungen, die nicht gewünscht sind. Es muss dann vor der Messung oder vor dem Ablegen des Sensors in der Tastergarage abgewartet werden, bis die Schwingungen abgeklungen sind.

Das der Erfindung zugrunde liegende technische Problem besteht darin, ein Koordinatenmessgerät mit einer Pinole und einem an oder wenigstens teilweise in der Pinole angeordneten Interface anzugeben, mit dem ein automatisches Einwechseln eines Tastkopfes oder eines Sensors oder eines Dreh-/Schwenkgelenkes durchgeführt werden kann, wobei der Tastkopf oder der Sensor oder das Dreh-/Schwenkgelenk reproduzierbar an oder wenigstens teilweise in dem Interface gelagert wird und welches darüber hinaus ein geringes Gewicht aufweist. Darüber hinaus soll ein Verfahren zum Anordnen eines auswechselbaren Tastkopfes oder eines auswechselbaren Sensors oder eines auswechselbaren Dreh-/Schwenkgelenkes an oder wenigstens teilweise in einem Interface eines Koordinatenmessgerätes angegeben werden, mit dem der Tastkopf oder der Sensor oder das Dreh-/Schwenkgelenk automatisch ausgetauscht werden können und eine reproduzierbare Lagerung gewährleistet ist.

Dieses technische Problem wird durch ein Koordinatenmessgerät mit den Merkmalen gemäß Anspruch 1 sowie durch ein Verfahren mit den Merkmalen gemäß Anspruch 7 gelöst.

Das erfindungsgemäße Koordinatenmessgerät mit einer Pinole und einem an oder wenigstens teilweise in der Pinole angeordneten Interface und einer Lagervorrichtung, welche wenigstens ein an dem Interface angeordnetes Lager und wenigstens ein an einem Tastkopf oder an einem Sensor oder an einem Dreh-/Schwenkgelenk angeordnetes Gegenlager aufweist, und mit einer an dem Interface angeordneten Haltevorrichtung, zeichnet sich dadurch aus, dass in oder an dem Interface wenigstens zwei krafterzeugende Vorrichtungen angeordnet sind, die als wenigstens zwei auf die Haltevorrichtung wirkende krafterzeugende Vorrichtungen ausgebildet sind, und dass eine erste krafterzeugende Vorrichtung als Feder ausgebildet ist und dass eine zweite krafterzeugende Vorrichtung als pneumatisch betriebener Kolben ausgebildet ist.

Das erfindungsgemäße Koordinatenmessgerät weist den Vorteil auf, dass der Tastkopf oder der Sensor oder das Dreh-/Schwenkgelenk automatisch ausgetauscht werden können. Darüber hinaus wird zuverlässig eine reproduzierbare Lagerung des Tastkopfes oder des Sensors oder des Dreh-/ Schwenkgelenkes an dem Interface gewährleistet, da durch die Erzeugung der ersten Haltekraft eine Vorpositionierung des Tastkopfes oder des Sensors oder des Dreh-/Schwenkgelenkes an dem Interface vorgenommen wird, so dass Lager und Gegenlager korrekt ineinandergreifen. Durch die zweite krafterzeugende Vorrichtung wird die Haltekraft erzeugt, die für die Messung erforderlich ist.

Die erste krafterzeugende Vorrichtung ist als Feder ausgebildet und die zweite krafterzeugende Vorrichtung ist als pneumatischer Kolben ausgebildet. Diese Ausgestaltung des erfindungsgemäßen Koordinatenmessgerätes weist den Vorteil auf, dass die Feder Platz sparend in dem Interface angeordnet werden kann. Darüber hinaus weist die Feder kein großes Gewicht auf. Mit der zweiten krafterzeugenden Vorrichtung, die als pneumatisch betriebener Kolben ausgebildet ist, kann auf einfache Art und Weise die für die Messung erforderliche Haltekraft erzeugt werden. Das Gewicht dieser Vorrichtung setzt sich hauptsächlich aus dem Gewicht der Ventile und einem luftdichten Raum zusammen. Diese Teile weisen ebenfalls ein sehr geringes Gewicht auf.

Mit dem erfindungsgemäßen Koordinatenmessgerät wird vermieden, dass der Tastkopf oder der Sensor oder das Dreh-/Schwenkgelenk nicht korrekt mit den Gegenlagern in den am Interface angeordneten Lagern sitzt.

Die Lager können beispielsweise als Kugeln ausgebildet sein und die Gegenlager als sogenannte V-Lager, beispielsweise bestehend aus zwei Zylindern. Während des Einwechselvorganges kann es vorkommen, dass die Kugeln nicht exakt in die V-Lager greifen und so die reproduzierbare Lagerung nicht gewährleistet ist.

Dies wird gemäß der Erfindung dadurch vermieden, dass eine erste Kraft von einer ersten krafterzeugenden Vorrichtung ausgeübt wird und erst anschließend die für die Messung erforderliche Haltekraft mit der zweiten krafterzeugenden Vorrichtung, nämlich dem pneumatisch betriebenen Kolben erzeugt wird.

Die beiden krafterzeugenden Vorrichtungen sind vorteilhaft unabhängig voneinander ausgebildet. Das bedeutet, dass die erste und die zweite krafterzeugende Vorrichtung unabhängig voneinander die Haltevorrichtung mit einer Kraft beaufschlagen können.

Gemäß einer vorteilhaften Ausführungsform der Erfindung ist vorgesehen, dass die als Feder ausgebildete erste krafterzeugende Vorrichtung als eine zumindest während einer Positionierung des Tastkopfes oder des Sensors oder des Dreh-/Schwenkgelenkes eine Kraft erzeugende Vorrichtung ausgebildet ist, und dass die zweite krafterzeugende Vorrichtung als eine nach der Positionierung des Tastkopfes eine Kraft erzeugende Vorrichtung ausgebildet ist.

Diese besonders bevorzugte Ausführungsform weist den Vorteil auf, dass die erste Kraft, nämlich die von der ersten krafterzeugenden Vorrichtung erzeugte Kraft, während der Positionierung des Tastkopfes oder des Sensors oder des Dreh-/Schwenkgelenkes wirkt. Hierdurch können sich die Lager und die Gegenlager exakt zueinander positionieren. Anschließend wird die zweite Kraft von der zweiten krafterzeugenden Vorrichtung erzeugt, nämlich die Haltekraft für den Tastkopf oder den Sensor oder das Dreh-/Schwenkgelenk, die während der Messung erforderlich ist.

Hierdurch ist eine reproduzierbare Positionierung dauerhaft gewährleistet.

Die erste krafterzeugende Vorrichtung wirkt vorteilhaft während des Vorganges der Positionierung des Tastkopfes. Die zweite krafterzeugende Vorrichtung wirkt vorteilhaft nach der Positionierung des Tastkopfes, zumindest jedoch während des Messvorganges.

Gemäß einer weiteren vorteilhaften Ausführungsform der Erfindung ist vorgesehen, dass die Haltevorrichtung als Haken ausgebildet ist, beispielsweise als Klemmhaken.

An oder in dem Interface ist die Haltevorrichtung angeordnet. Die Ausführungsform als Haken ist mechanisch sehr zuverlässig.

Gemäß einer weiteren vorteilhaften Ausführungsform der Erfindung ist vorgesehen, dass wenigstens ein Sensor für eine Lageerkennung des Tastkopfes oder des Sensors oder des Dreh-/Schwenkgelenkes vorgesehen ist.

Diese Ausführungsform weist den Vorteil auf, dass nach Erkennen, dass der Tastkopf oder der Sensor oder das Dreh-/ Schwenkgelenk in der gewünschten Lage angeordnet ist, automatisch die beiden krafterzeugenden Vorrichtungen angesteuert werden. Durch die vorteilhaft als Druckfeder ausgebildete erste krafterzeugende Vorrichtung kann zunächst eine geringe Kraft aufgebracht werden, so dass die Lager und die Gegenlager die optimale Lage zueinander einnehmen. Danach kann mit einem entsprechenden Zeitversatz die zweite krafterzeugende Vorrichtung mittels Luftdruck die für die Messung erforderliche Haltekraft aufbringen.

Die Druckfeder verhindert, dass im Fehlerfall, wenn die zweite krafterzeugende Vorrichtung ausfallen sollte, der Tastkopf oder der Sensor oder das Dreh-/Schwenkgelenk sich ungewollt von dem Interface löst.

Vorteilhaft ist eine Sensorik vorgesehen, die einen derartigen Fehler erkennt und den Betrieb des Koordinatenmessgerätes stoppt.

Gemäß einer weiteren vorteilhaften Ausführungsform der Erfindung ist vorgesehen, dass wenigstens eine Vorrichtung zum Erzeugen von Schwingungen zum Anregen des Tastkopfes oder des Sensors oder des Dreh-/Schwenkgelenkes vorgesehen ist. Durch das Erzeugen von Schwingungen wird der Effekt verstärkt, dass sich die Lager exakt in den Gegenlagern positionieren, während die erste Haltekraft erzeugt wird. Nach dieser Positionierung wird die zweite Haltekraft erzeugt, die zumindest während des Messvorganges dauerhaft erhalten bleibt.

Gemäß einer weiteren vorteilhaften Ausführungsform der Erfindung ist vorgesehen, dass das Interface lösbar fest an oder wenigstens teilweise in der Pinole des Koordinatenmessgerätes angeordnet ist.

Das Interface ist vorteilhaft nicht im üblichen Sinne auswechselbar, das heißt automatisch auswechselbar an der Pinole angeordnet, sondern das Interface ist vorteilhaft lösbar fest an oder wenigstens teilweise in der Pinole des Koordinatenmessgerätes angeordnet.

Das erfindungsgemäße Verfahren zum Anordnen eines auswechselbaren Tastkopfes oder eines auswechselbaren Sensors oder eines auswechselbaren Dreh-/Schwenkgelenkes an oder wenigstens teilweise in einem Interface eines Koordinatenmessgerätes mit den Merkmalen gemäß Anspruch 1, bei dem der Tastkopf oder der Sensor oder das Dreh-/Schwenkgelenk mit wenigstens einer Haltevorrichtung geklemmt wird, zeichnet sich dadurch aus,
- dass zeitlich aufeinanderfolgend wenigstens zwei unterschiedliche auf die Haltevorrichtung wirkende Kräfte erzeugt werden,
- dass durch Erzeugung einer ersten Kraft das wenigstens eine Lager und das wenigstens eine Gegenlager in Kontakt gebracht und/oder vorgeklemmt werden, und
- dass durch Erzeugung einer zweiten Kraft der Tastkopf oder der Sensor oder das Dreh-/Schwenkgelenk an oder wenigstens teilweise in dem Interface final geklemmt wird.

Das erfindungsgemäße Verfahren weist den Vorteil auf, dass die beiden unterschiedlichen, auf die Haltvorrichtung wirkenden Kräfte nacheinander, das heißt aufeinanderfolgend erzeugt werden. Die erste Kraft dient zum Positionieren der Lager in den Gegenlagern. Das wenigstens eine Lager und das wenigstens eine Gegenlager werden durch Erzeugung der ersten Kraft in Kontakt gebracht und/oder vorgeklemmt. Durch Erzeugung der zweiten Kraft wird der Tastkopf oder der Sensor oder das Dreh-/Schwenkgelenk an oder wenigstens teilweise in dem Interface final geklemmt.

Hierdurch ist eine hochgenaue Lagerung und eine reproduzierbare Lagerung möglich.

Der entscheidende Vorteil liegt dabei darin, dass das Verfahren vollautomatisch durchgeführt werden kann.

Gemäß einer weiter vorteilhaften Ausführungsform des erfindungsgemäßen Verfahrens ist vorgesehen, dass die zweite Kraft zusätzlich zu der ersten Kraft auf die Haltevorrichtung wirkt.

Hierdurch ist gewährleistet, dass der Tastkopf oder der Sensor oder das Dreh-/Schwenkgelenk immer durch eine Haltekraft gehalten wird. Die Kraft zur finalen Klemmung des Tastkopfes oder des Sensors oder des Dreh-/Schwenkgelenkes ist vorteilhaft größer als die Kraft, die während der Vorpositionierung aufgebracht wird, so dass es von Vorteil ist, wenn beide Kräfte während der Messung auf die Haltevorrichtung wirken.

Gemäß einer weiteren vorteilhaften Ausführungsform der Erfindung ist vorgesehen, dass die erste Kraft kleiner als die zweite Kraft ist. Die erste Kraft soll relativ gering sein. Die Kraft soll so groß sein, dass eine Vorpositionierung der Lager in den Gegenlagern erfolgt und noch keine Klemmung erfolgt. Würde schon die Klemmung erfolgen wie beim Stand der Technik, das heißt, die Kraft würde sofort nach der Freigabe wirken, erfolgt durch die schnelle schlagartige Freisetzung der Federkraft, dass der Kraftschluss schlagartig vollzogen wird. Dabei kann es passieren, dass die positionsgebenden Elemente (beispielsweise Kugel und Prisma) durch zum Beispiel Reibung nicht in ihre Endpositionen gelangen. Damit wird eine fehlerhafte Position eingenommen, was sich in fehlerhaften Messungen niederschlägt.

Aus diesem Grunde ist es vorteilhaft, dass die zweite Kraft größer ist als die erste Kraft, da die erste Kraft lediglich zur Vorpositionierung dienen soll.

Gemäß einer weiteren vorteilhaften Ausführungsform ist vorgesehen, dass während oder nach Erzeugung der ersten Kraft der Tastkopf oder der Sensor oder das Dreh-/Schwenkgelenk durch eine dritte Kraft wenigstens einmal bewegt wird. Diese Kraft kann ein Rütteln oder Vibrieren des Tastkopfes oder des Sensors oder des Dreh-/Schwenkgelenkes bewirken, so dass die Lager und die Gegenlager ihre vorgegebene Position zueinander einnehmen.

Die Erzeugung der dritten Kraft erfolgt vorteilhaft in der Lagerebene. Das heißt, die dritte Kraft wird vorteilhaft in der Ebene erzeugt, in der die Lager und die Gegenlager ineinandergreifen.

Eine weitere vorteilhafte Ausführungsform der Erfindung sieht vor, dass durch Erzeugen der ersten Kraft eine Vorpositionierung des Tastkopfes oder des Sensors oder des Dreh-/Schwenkgelenkes in eine Endlage durchgeführt wird.

Wie schon ausgeführt, ist gemäß der Erfindung vorteilhaft vorgesehen, dass erst eine Vorpositionierung des Tastkopfes oder des Sensors oder des Dreh-/Schwenkgelenkes durchgeführt wird, bevor die Haltekraft auf den Tastkopf oder den Sensor oder das Dreh-/Schwenkgelenk wirkt, die für die Messung erforderlich ist. Hierdurch wird die reproduzierbare Lage zuverlässig eingenommen.

Weitere Merkmale und Vorteile der Erfindung ergeben sich anhand der zugehörigen Zeichnungen, in denen verschiedene Ausführungsformen eines erfindungsgemäßen Koordinatenmessgerätes nur beispielhaft dargestellt sind, ohne die Erfindung auf diese Ausführungsbeispiele zu beschränken. In den Zeichnungen zeigen:
- Fig. 1: ein Koordinatenmessgerät in Portalbauweise in perspektivischer Ansicht;
- Fig. 2: eine Pinole mit Interface, Tastkopf und Taststifthalter, teilweise im Längsschnitt;
- Fig. 3: eine erfindungsgemäße Haltevorrichtung in geöffneter Seitenansicht;
- Fig. 4: eine Dreipunktlagerung im Längsschnitt;
- Fig. 5: eine Dreipunktlagerung in Draufsicht;
- Fig. 6: ein Gegenstück zur Dreipunktlagerung der Fig. 5 in Draufsicht;
- Fig. 7: ein geändertes Ausführungsbeispiel einer Pinole mit Dreh-/Schwenkgelenk mit Tastkopf im Längsschnitt.

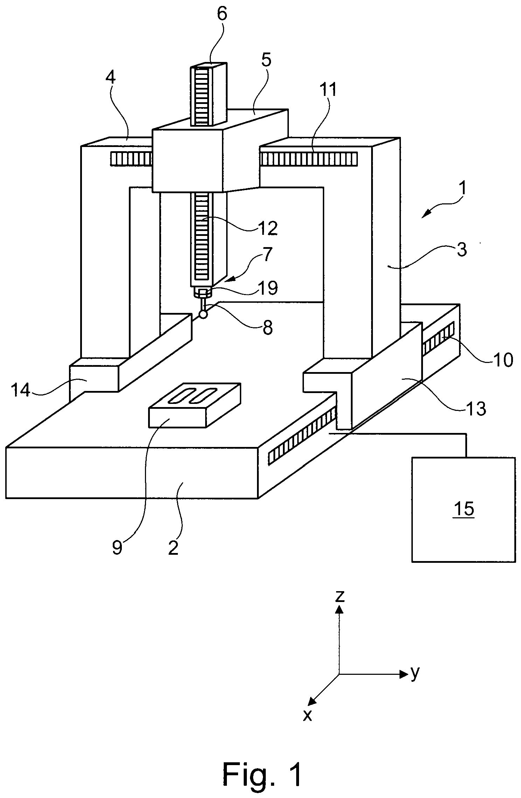

Fig. 1 zeigt ein Koordinatenmessgerät 1 in Portalbauweise mit einem Werkzeugtisch 2 und einem Portal 3. Das Portal 3 weist eine Traverse 4 auf. An der Traverse 4 ist ein Schlitten 5 angeordnet, an dem wiederum eine Pinole 6 angeordnet ist. Das Portal 3 ist in X-Richtung beweglich, der Schlitten 5 in Y-Richtung und die Pinole 6 in Z-Richtung. An der Pinole 6 ist ein Tastkopf 7 angeordnet, der einen Taststift 8 trägt. Auf dem Messtisch 2 des Koordinatenmessgerätes ist ein Werkstück 9 angeordnet.

An dem Messtisch 2 ist ein Maßstab 10 angeordnet, an der Traverse 4 ein Maßstab 11 und an der Pinole 6 ein Maßstab 12. Über entsprechende Wegmesssysteme (nicht dargestellt) kann die Position des Taststiftes 8 erfasst werden. Das Portal 3 weist Portalfüße 13, 14 auf, mit denen das Portal 3 an dem Messtisch 2 beweglich angeordnet ist. Über einen Computer 15, der auch eine Steuereinheit enthält, werden die Messwerte erfasst und verarbeitet.

Grundsätzlich besteht auch die Möglichkeit, dass das Portal 3 feststehend angeordnet ist und der Werkzeugtisch mit dem Werkstück relativ zu dem Portal verfahren wird.

Darüber hinaus ist auch bekannt, zum Beispiel einen Drehtisch auf dem Werkzeugtisch 2 anzuordnen.

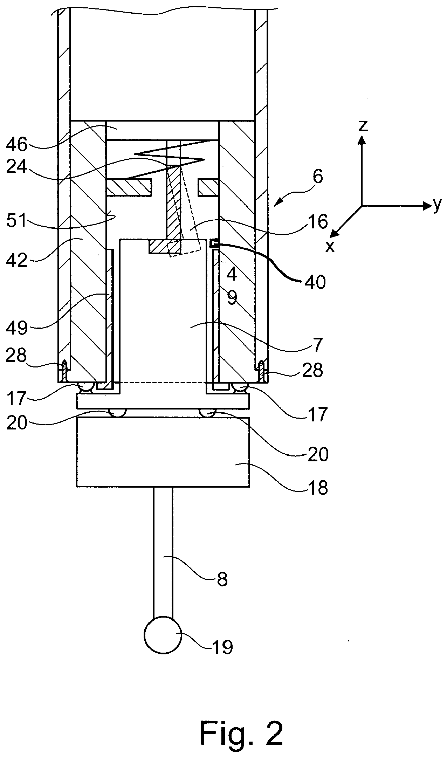

Fig. 2 zeigt die Pinole 6 in schematischer Darstellung. In der Pinole 6 sind ein Interface 42 und der Tastkopf 7 angeordnet. Der Tastkopf 7 wird mittels eines in Y-Richtung schwenkbaren und in Z-Richtung bewegbaren Hakens 16 mittels einer Dreipunktlagerung 17 in der Pinole 6 fixiert. An dem Tastkopf 7 ist eine Taststifthalterung 18 angeordnet, die den Taststift 8 mit einem Tastelement 19 trägt. Die Taststifthalterung 18 ist ebenfalls mittels einer Dreipunktlagerlagerung 20 an dem Tastkopf 7 lösbar befestigt. Die Haltemittel für die Taststifthalterung 18 sind in Fig. 2 nicht dargestellt.

In Fig. 2 ist lediglich schematisch ein Interface 42 vorgesehen. Das Interface 42 weist eine Haltevorrichtung 46 für den Haken 16 für einen Adapter eines Sensors/Tastkopfs/Dreh-/Schwenkgelenks auf. An dem Interface 42 ist auch die Dreipunktlagerung 17 angeordnet.

Das Interface 42 ist zumindest teilweise innerhalb der Pinole 6 angeordnet. Das Interface 42 ist mit Schrauben 28 an der Pinole 6 angeordnet. Durch Lösen der Schrauben 28 kann das Interface 42 aus der Pinole 6 entfernt werden.

Damit der Tastkopf 7 beim Wechseln keinen Schaden nimmt, falls er mit einer Innenwand des Interface 42 in Kontakt kommt, ist eine Schutzvorrichtung 49 vorgesehen. Die Schutzvorrichtung 49 ist beispielsweise aus Kunststoff gebildet. Die Schutzvorrichtung 49 ist in Fig. 2 flächig ausgebildet. Die Schutzvorrichtung 49 ist in dem Ausführungsbeispiel als Segment an einer Innenfläche 51 des Interface 42 angeordnet. Die Schutzvorrichtung 49 kann auch eine größere axiale Ausdehnung in Richtung einer Längsachse der Pinole 6 aufweisen, als in Fig. 2 dargestellt. Sie kann segmentweise mit mindestens einem Segment oder kontinuierlich ausgebildet sein.

In dem Interface 42 ist ein Sensor 40 angeordnet, der erkennt, ob der Tastkopf 7 sich in der in Fig. 2 dargestellten Position befindet, das heißt, in der der Haken 16 eine Verriegelung, das heißt eine Klemmung, vornehmen kann.

Nach Erkennen des Tastkopfes 7 in der Verriegelungsposition wird der Haken 16 von der gestrichelt dargestellten Position in die schraffiert dargestellte Position bewegt.

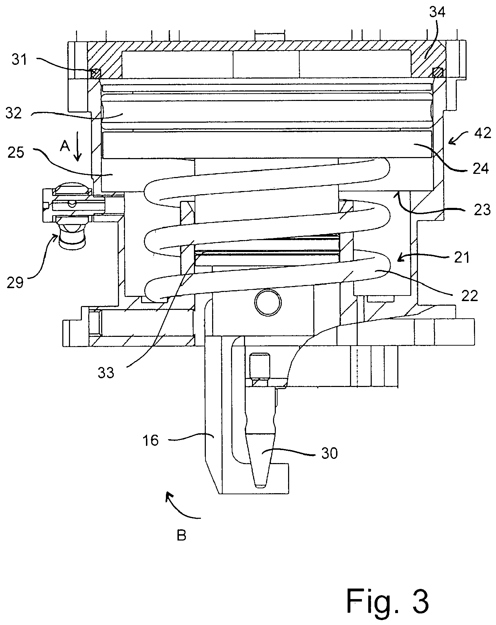

Die Schritte des Verriegelns werden in Fig. 3 erläutert.

Fig. 3 zeigt die Haltevorrichtung des Interface 46 mit dem Haken 16, der hinter einer Platte eines Adapters eines Sensors, eines Tastkopfes 7 oder eines Dreh-/Schwenkgelenkes 52 (nicht dargestellt) greift. Der Haken 16 wird mit einer ersten Vorrichtung 21, die aus einer Druckfeder 22 besteht, mit einer ersten Kraft mit einer Kraftkomponenten entgegen der eingezeichneten Richtung A beaufschlagt, die eine Vorpositionierung des Tastkopfes 7 (in Fig. 3 nicht dargestellt) bewirkt. Eine zweite Vorrichtung 23, die aus einem mit Druckluft beaufschlagten Kolben 24 gebildet ist, übt eine zweite Haltekraft mit einer Kraftkomponenten entgegen der eingezeichneten Richtung A auf den Haken 16 aus. Diese zweite Haltekraft ist die Kraft, die zusätzlich während des Messvorganges auf den Tastkopf 7 (nicht dargestellt) wirkt. Der Kolben 24 ist beweglich in einem mit Druckluft beaufschlagbaren Raum 25 angeordnet. Für den Einlass und Auslass von Druckluft ist ein Druckluftanschluss 29 vorgesehen. Wird der Raum 25 mit Druckluft beaufschlagt, wird der Kolben 24 in die in Fig. 3 dargestellte Position gedrückt. Der Haken 16 klemmt den Tastkopf 7 final (in Fig. 3 nicht dargestellt).

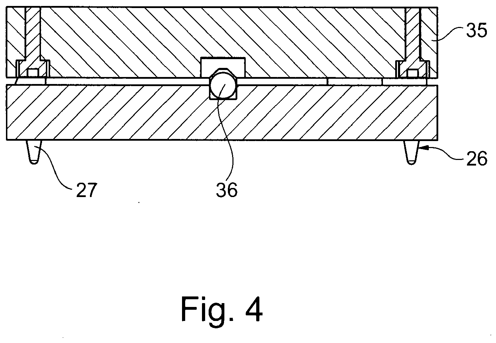

In Fig. 3 ist ein Zentrierstift 30 dargestellt. Üblicherweise ist ein zweiter in Fig. 3 nicht dargestellter Zentrierstift vorgesehen, damit der Tastkopf 7 (in Fig. 3 nicht dargestellt) in eine vordefinierte Position gebracht wird, damit die Lager und Gegenlager, die in den Fig. 4 bis 6 näher beschrieben werden, angeordnet werden.

Weiterhin sind Dichtungen 31, 32, 33 vorgesehen, damit der Raum 25 nach außen abgedichtet wird, damit der Kolben 24 in dem Raum durch die Druckluft bewegbar ist. Der Kolben 24 kann von oben mit Druckluft beaufschlagt und damit in Richtung des Pfeiles A bewegt werden, so dass die Druckfeder gestaucht wird und der Haken 16 in Richtung des Pfeiles B geschwenkt werden kann und somit den Tastkopf 7 (in Fig. 3 nicht dargestellt) freigibt.

Fällt das Druckluftsystem 23 aus, so hält immer noch die erste Vorrichtung 21 mit der Druckfeder 22 den Haken 16 in der in Fig. 3 dargestellten Position, so dass der Tastkopf 7 (in Fig. 3 nicht dargestellt) sich nicht von alleine lösen kann.

Das Interface 42 weist einen Deckel 34 auf, der die Vorrichtungen 21, 23 nach oben hin in Richtung Pinole (nicht dargestellt) abschließt.

Wenn der Sensor 40 (in Fig. 2 dargestellt) erkennt, dass der Tastkopf 7 in der Position angeordnet ist, in dem der Haken 16 den Tastkopf 7 klemmen kann, wird in einem ersten Schritt die erste Vorrichtung 21, das heißt die Druckfeder 22, aktiviert, so dass eine erste Haltekraft auf den Haken 16 wirkt. Die Haltekraft ist derart ausgelegt, dass die Lager und die Gegenlager, die in den Fig. 4 bis 6 beschrieben werden, korrekt ineinandergreifen. Sollten die Lager und Gegenlager zu Beginn der Positionierung nicht exakt ineinandergreifen, ist die Haltekraft lediglich so groß, dass die Lager und die Gegenlager die korrekte Endposition zueinander einnehmen können. Anschließend wird automatisch in einem zweiten Schritt die zweite Haltekraft durch die zweite Vorrichtung 23 aufgebracht. Der Kolben 24 wird mit Druckluft beaufschlagt, so dass er sich entgegen der Richtung des Pfeiles A bewegt und der Tastkopf 7 wird final geklemmt.

Ein Klemmen des Tastkopfes 7 bedeutet, dass die für eine Messung erforderliche Haltekraft auf den Tastkopf 7 durch den Haken 16 aufgebracht wird. Der Tastkopf 7 wird nicht aus den Lagern gelöst, wenn eine äußere Kraft durch eine Antastung auf den Tastkopf 7 ausgeübt wird.

Das Lösen des Tastkopfes 7 erfolgt in umgekehrter Reihenfolge. Der Kolben 24 wird derart mit Druckluft beaufschlagt, dass er sich in Richtung des Pfeiles A bewegt. Hierzu wird die der Pinole (nicht dargestellt) zugewandte Seite des Kolbens 24 mit Druckluft beaufschlagt.

Durch die Beaufschlagung des Kolbens 24 mit Druckluft auf der federabgewandten Seite wird der Kolben 24 in Richtung des Pfeiles A bewegt. Hierdurch drückt der Kolben 24 die Feder 22 entgegen der Federkraft zusammen.

Anschließend gibt die Feder 22 den Haken 16 frei, so dass er sich in Richtung des Pfeiles B bewegt, das heißt in die in Fig. 2 dargestellte gestrichelte Position.

Sollte die zweite krafterzeugende Vorrichtung 23 ausfallen, drückt die Feder 22 den Kolben 24 entgegen der Pfeilrichtung nach oben. Hierdurch ist gewährleistet, dass der Haken 16 sich nicht öffnet und der Tastkopf 7 (in Fig. 3 nicht dargestellt) sich nicht ungewollt löst.

In Fig. 4 ist eine Ebene 35 mit dem Dreipunktlager 17 im Detail dargestellt. Das Dreipunktlager 17 besteht aus drei Kugeln oder Kugelabschnitten 36. Darüber hinaus sind Zentrierstifte 26, 27 vorhanden, die zum einen den Tastkopf 7 beim Einsetzen vorzentrieren und zum anderen bei asymmetrischer Ausgestaltung der Zentrierstifte 26, 27 ein falsches, das heißt verdrehtes Einsetzen des Tastkopfes 7 verhindern.

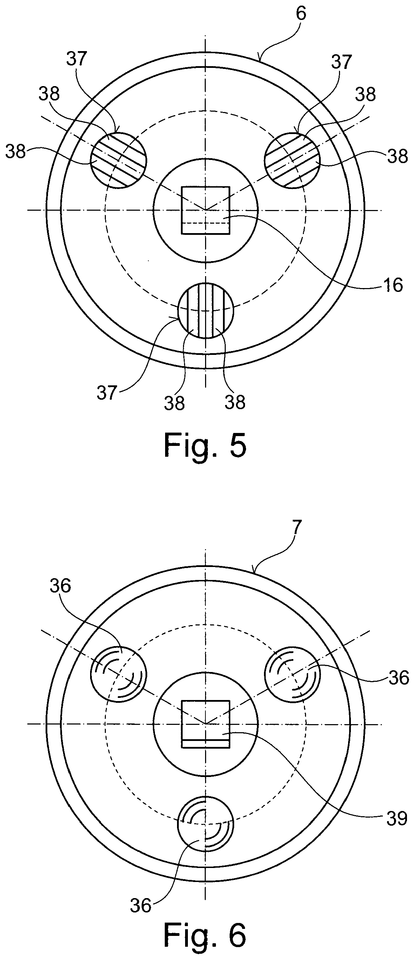

Fig. 5 zeigt das Dreipunktlager 17 in Draufsicht. In Fig. 5 ist die Pinole 6 mit den drei Lagern 37 dargestellt. Die Lager 37 weisen jeweils zwei Zylinder 38 auf. Darüber hinaus ist der Haken 16 vorgesehen.

Fig. 6 zeigt den Tastkopf 7, in dem drei Halbkugeln 36 angeordnet sind. Die Halbkugeln 36 kommen, wenn der Tastkopf 7 an der Pinole 6 angeordnet wird, mit den Zylindern 38 an insgesamt sechs Punkten in Kontakt. Hierdurch wird eine reproduzierbare und hochpräzise Lagerung erreicht. Der Tastkopf 7 weist eine Aufnahme 39 für den Haken 16 auf.

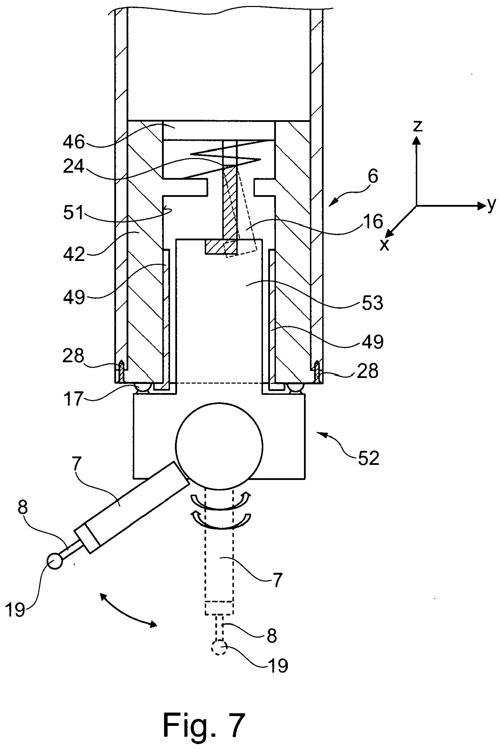

Fig. 7 zeigt die Pinole 6 mit dem in der Pinole 6 angeordneten Interface 42. In dem Interface 42 ist ein Adapter 53 eines Dreh-/Schwenkgelenkes 52 angeordnet. An Stelle des Tastkopfes 7, wie er in Fig. 2 dargestellt ist, ist in dem Interface 42 der Adapter 53 des Dreh-/Schwenkgelenkes 52 angeordnet. An dem Dreh-/Schwenkgelenk 52 ist ein Tastkopf 7 vorgesehen, an dem auswechselbar ein Taststift 8 mit einer Tastkugel 19 anordbar ist. Der Taststift 8 kann in die gestrichelt dargestellte Position geschwenkt werden.

Der Adapter 53 des Dreh-/Schwenkgelenkes 52 ist mittels des Hakens 16 und einer Dreipunktlagerung 17 reproduzierbar in dem Interface 42 angeordnet. Die Schutzvorrichtung 49 schützt den Adapter 53 beim Einwechseln vor Schäden.

Das Interface 42 ist innerhalb der Pinole 6 angeordnet. Das Interface 42 ist mit Schrauben 28 an der Pinole 6 angeordnet. Durch Lösen der Schrauben 28 kann das Interface 42 aus der Pinole 6 entfernt werden.

### Bezugszahlen

- 1: Koordinatenmessgerät
- 2: Werkzeugtisch
- 3: Portal
- 4: Traverse
- 5: Schlitten
- 6: Pinole
- 7: Tastkopf
- 8: Taststift
- 9: Werkstück
- 10: Maßstab
- 11: Maßstab
- 12: Maßstab
- 13: Portalfuß
- 14: Portalfuß
- 15: Computer
- 16: Haken
- 17: Dreipunktlager
- 18: Taststifthalterung
- 19: Tastelement
- 20: Dreipunktlagerung
- 21: erste Vorrichtung
- 22: Druckfeder
- 23: zweite Vorrichtung
- 24: Kolben
- 25: mit Druckluft beaufschlagbarer Raum
- 26: Zentrierstift
- 27: Zentrierstift
- 28: Schrauben
- 29: Druckluftanschluss
- 30: Zentrierstift
- 31: Dichtung
- 32: Dichtung
- 33: Dichtung
- 34: Deckel
- 35: Ebene der Dreipunkthalterung
- 36: Kugelabschnitte
- 37: Lager
- 38: Zylinder
- 39: Aufnahme
- 40: Sensor
- 42: Interface
- 46: Haltevorrichtung
- 49: Schutzvorrichtung
- 51: Innenfläche Interface
- 52: Dreh-/Schwenkgelenk
- 53: Adapter Dreh-/Schwenkgelenk
- A: Pfeil
- B: Pfeil

## Patentansprüche

1. Koordinatenmessgerät (1) mit einer Pinole (6) und einem an oder wenigstens teilweise in der Pinole (6) angeordneten Interface (42) und einer Lagervorrichtung (17), welche wenigstens ein an dem Interface (42) angeordnetes Lager (37) und wenigstens ein an einem Tastkopf (7) oder an einem Sensor oder an einem Dreh-/Schwenkgelenk (52) angeordnetes Gegenlager (36) aufweist, und mit einer an dem Interface (42) angeordneten Haltevorrichtung (16),
**dadurch gekennzeichnet,**
**dass** in oder an dem Interface (42) wenigstens zwei krafterzeugende Vorrichtungen (21, 23) angeordnet sind, die als wenigstens zwei auf die Haltevorrichtung (16) wirkende Kräfte erzeugende Vorrichtungen (21, 23) ausgebildet sind, und dass eine erste krafterzeugende Vorrichtung (21) als Feder (22) ausgebildet ist und dass eine zweite krafterzeugende Vorrichtung (23) als pneumatisch betriebener Kolben (24) ausgebildet ist.

2. Koordinatenmessgerät nach Anspruch 1, **dadurch gekennzeichnet, dass** die als Feder (22) ausgebildete erste krafterzeugende Vorrichtung (21) als eine zumindest während einer Positionierung des Tastkopfes (7) oder des Sensors oder des Dreh-/Schwenkgelenkes (52) eine Kraft erzeugende Vorrichtung (21) ausgebildet ist, und dass die zweite krafterzeugende Vorrichtung (23) als eine nach der Positionierung des Tastkopfes (7) eine Haltekraft erzeugende Vorrichtung (23) ausgebildet ist.

3. Koordinatenmessgerät nach einem der Ansprüche 1 oder 2, **dadurch gekennzeichnet, dass** die Haltevorrichtung (16) mit einem Haken ausgebildet ist.

4. Koordinatenmessgerät nach einem der vorhergehenden Ansprüche, **dadurch gekennzeichnet, dass** wenigstens ein Sensor (40) für eine Lageerkennung des Tastkopfes (7) oder des Sensors oder des Dreh-/Schwenkgelenkes (52) vorgesehen ist.

5. Koordinatenmessgerät nach einem der vorhergehenden Ansprüche, **dadurch gekennzeichnet, dass** wenigstens eine Vorrichtung zum Erzeugen von Schwingungen zum Anregen des Tastkopfes (7) oder des Sensors oder des Dreh-/Schwenkgelenkes (52) vorgesehen ist.

6. Koordinatenmessgerät nach einem der vorhergehenden Ansprüche, **dadurch gekennzeichnet, dass** das Interface (42) lösbar fest an oder wenigstens teilweise in der Pinole (6) des Koordinatenmessgerätes (1) angeordnet ist.

7. Verfahren zum Anordnen eines auswechselbaren Tastkopfes (7) oder eines auswechselbaren Sensors oder eines auswechselbaren Dreh-/Schwenkgelenkes (52) an oder wenigstens teilweise in einem Interface (42) eines Koordinatenmessgerätes (1) gemäß Anspruch 1, bei dem der Tastkopf (7) oder der Sensor oder das Dreh-/Schwenkgelenk (52) mit wenigstens einer Haltevorrichtung (16) geklemmt wird,
**dadurch gekennzeichnet,**
- **dass** zeitlich aufeinanderfolgend wenigstens zwei unterschiedliche auf die Haltevorrichtung (16) wirkende Kräfte erzeugt werden,
- **dass** durch Erzeugung einer ersten Kraft das wenigstens eine Lager (37) und das wenigstens eine Gegenlager (36) in Kontakt gebracht und/oder vorgeklemmt werden, und
- **dass** durch Erzeugung einer zweiten Kraft der Tastkopf (7) oder der Sensor oder das Dreh-/Schwenkgelenk (52) an oder wenigstens teilweise in dem Interface (42) geklemmt wird.

8. Verfahren nach Anspruch 7, **dadurch gekennzeichnet, dass** durch Erzeugen der ersten Kraft eine Vorpositionierung des Tastkopfes (7) oder des Sensors oder des Dreh-/Schwenkgelenkes (52) in einer Endlage durchgeführt wird.

9. Verfahren nach einem der Ansprüche 7 oder 8,
**dadurch gekennzeichnet, dass** die zweite Kraft zusätzlich zu der ersten Kraft auf die Haltevorrichtung (16) wirkt.

10. Verfahren nach einem der Ansprüche 7 bis 9,
**dadurch gekennzeichnet, dass** die erste Kraft kleiner als die zweite Kraft ist.

11. Verfahren nach einem der Ansprüche 7 bis 10,
**dadurch gekennzeichnet, dass** während oder nach Erzeugung der ersten Kraft der Tastkopf (7) oder der Sensor oder das Dreh-/Schwenkgelenk (52) durch eine dritte Kraft wenigstens einmal bewegt wird.
